# EUROPÄISCHE PATENTSCHRIFT

(11) **EP 1 293 289 B1**
(45) Veröffentlichungstag und Bekanntmachung des Hinweises auf die Patenterteilung: **05.08.2009**
(21) Anmeldenummer: 02405710.1
(22) Anmeldetag: 20.08.2002
(51) Int. Cl.: B23Q 3/12

(54) **Wechselbare Werkzeugaufnahme**
Exchangeable tool holder
Porte-outil interchangeable

(30) Priorität: 31.08.2001 DE 10142733
(43) Veröffentlichungstag der Anmeldung: 19.03.2003
(73) Patentinhaber: HILTI Aktiengesellschaft, 9494 Schaan (LI)
(72) Erfinder: Britz, Rory, 86916 Kaufering (DE)
(74) Vertreter: Wildi, Roland

(56) Entgegenhaltungen:
- EP-A- 1 052 070
- DE-A- 19 857 774
- DE-A- 19 914 577

## Beschreibung

Die Erfindung bezeichnet eine Werkzeugaufnahme für ein zumindest teilweise drehendes und schlagendes Werkzeuggerät wie einen Bohrhammer, welche mit der antreibenden Werkzeugspindel des Werkzeuggerätes werkzeuglos montierbar und somit von Hand wechselbar ist, (siehe z.B. EP-A-1 052 070).

Üblicherweise sind an der antreibenden Werkzeugspindel des Werkzeuggerätes montierbare Werkzeugaufnahmen mit dieser über einen, mit einer Linksgewindeschraube gesicherten, Gewindeflansch verbunden und daher nur mit Hilfe von Werkzeug wechselbar.

Wechselbare Werkzeugaufnahmen sind oftmals über mittels einer von Hand versetzbaren Verschlusshülse radial begrenzt versetzbare Verriegelungselemente wie Kugeln, welche sowohl in zugeordnete Mitnehmer der Werkzeugspindel als auch der Werkzeugaufnahme eingreifen, werkzeuglos lösbar und somit von Hand wechselbar verbunden. Somit kann die Werkzeugaufnahme per Hand ausgewechselt werden, bspw. ein Zahnkranz-Bohrfutter gegen eine Bohrmeisselaufnahme. Bei drehenden Werkzeuggeräten werden axial versetzbare Verschlusshülsen bevorzugt.

Bei vorbekannten wechselbaren Werkzeugaufnahmen mit einer gegen eine Federkraft axial versetzbaren Verschlusshülse zur radial formschlüssigen Verriegelung der Werkzeugaufnahme mittels Kugel an der antreibenden Werkzeugspindel ist durch die bei schlagender Beanspruchung entstehenden Trägheitskräfte die Verriegelung der Kugel durch die über der Federvorspannung auftretenden axialen Vibrationen der Verschlusshülse temporär nicht gegeben. Eine Verstärkung der Feder ist durch die Nutzerakzeptanz begrenzt.

Nach der US4902177 sind wechselbare Werkzeugaufnahmen mit einem in zugeordnete, umlaufende Nuten der Werkzeugaufnahme und der Werkzeugspindel eingreifenden Spiralfederring axial verriegelt, wobei zur radial formschlüssigen Sicherung der Verriegelung über eine Gewindekappe die radiale Tiefe der Nut in der Werkzeugspindel feststellbar ist.

Nach der US4824298 ist eine abnehmbare Werkzeugaufnahme eines Bohrhammers durch eine radial gegen eine Federkraft versetzbare Verschlusshülse zur radial formschlüssigen Verriegelung der Werkzeugaufnahme mittels Kugel an der antreibenden Werkzeugspindel entriegelbar. Ein Abbremsen der Drehbewegung von Hand an der Verschlusshülse kann zu einer Entarretierung der Werkzeugaufnahme führen.

Zudem werden nach der US4423881 durch die Rotation in Form von Trägheitsdrehmomenten auftretende Masseträgheitskräfte zum selbständigen Verspannen oder Verriegeln eines Werkzeugs in einer drehenden Werkzeugaufnahme verwendet.

Die Aufgabe der Erfindung besteht in der Realisierung einer durch axiale Versetzung einer Verschlusshülse wechselbaren Werkzeugaufnahme, deren Verriegelung insbesondere auch bei schlagender Beanspruchung gesichert ist.

Die Aufgabe wird durch die Merkmale des Anspruchs 1 gelöst. Vorteilhafte Weiterbildungen ergeben sich aus den Unteransprüchen.

Im wesentlichen weist eine Werkzeugaufnahme für ein zumindest teilweise drehendes und schlagendes Werkzeuggerät, welche mit der antreibenden Werkzeugspindel des Werkzeuggerätes werkzeuglos montierbar ist, radial durch eine von Hand gegen eine Federkraft axial versetzbare Verschlusshülse verriegelbare Verriegelungselemente auf, welche sowohl in zugeordnete Mitnehmer der Werkzeugspindel als auch der Werkzeugaufnahme eingreifen, wobei einem durch Trägheitskräfte axial begrenzt beweglichen Verschlusselement der Verschlusshülse werkzeugseitig ein, axial verschiebbarer, Axialanschlag zugeordnet ist, der radial zwischen einer axial begrenzten radialen Ausnehmung der Werkzeugaufnahme und der Verschlusshülse dynamisch stabil platziert ist und somit diese auf der Werkzeugaufnahme dynamisch axial verriegelt sowie als radial nach innen vorgespanntes Federelement ausgebildet ist, wodurch die axial begrenzte radiale Ausnehmung der Werkzeugaufnahme über den axialen Zwang auf das Federelement eine Federkraft gegen die quasistatische axiale Versetzung der Verschlusshülse bewirkt.

Durch die bei schlagender dynamischer Beanspruchung auftretenden axialen Trägheitskräfte wird das Trägheitsverschlusselement wechselweise beschleunigt innerhalb der Verschlusshülse nur bis zu dem dynamischen Axialanschlag, welchen es durch die bei zweckentsprechender Benutzung des Werkzeuggerätes auftretenden Trägheitskräfte nicht überwinden kann, hin- und herbewegt, wodurch die Werkzeugaufnahme dynamisch verriegelt ist. Im betriebsfreien Zugang hingegen erfolgt durch die quasistatisch von Hand gegen die Federkraft versetzte Verschlusshülse eine radiale Freigabe aller Verriegelungselemente, wodurch die Werkzeugaufnahme werkzeuglos lösbar und somit von Hand wechselbar ist.

Vorteilhaft ist die axial begrenzte radiale Ausnehmung nach aussen axial konvex ausgebildet, wodurch sich über den Zwang des radial nach innen vorgespannten Federelementes eine axial bistabile Position der Verschlusshülse ausbildet, welche der Verriegelungsposition und der Entriegelungsposition zugeordnet ist, wodurch die Werkzeugaufnahme ohne stetig notwendige Kraft wechselbar ist.

Vorteilhaft weist die dem dynamischen Axialanschlag zugeordnete Fläche des Trägheitsverschlusselements eine innenliegende Radialphase auf, welche in der Position der dynamischen Verriegelung zusätzlich den dynamischen Axialanschlag zumindest teilweise radial aussen umgibt, wodurch dieser ebenfalls dynamisch verriegelt ist.

Vorteilhaft ist der werkzeugseitige Anschlag das Trägheitsverschlusselements gegen die Verschlusshülse über eine schwache Axialfeder ausgebildet, wodurch deren Axialfederkraft bei der dynamischen Verriegelung durch die Trägheitskraft überwindbar ist, jedoch im quasistatischen Fall das Trägheitsverschlusselement verdrängt und somit eine Verriegelung des dynamischen Axialanschlags verhindert wird.

Vorteilhaft ist das Trägheitsverschlusselement hülsenförmig ausgebildet und koaxial innerhalb der Verschlusshülse angeordnet, wodurch mehrere umlaufend versetzt angeordnete Verriegelungselemente durch das Trägheitsverschlusselement verriegelbar sind.

Vorteilhaft ist das Trägheitsverschlusselement koaxial zwischen einem von Hand zugänglichen Verschlusshülsenaussenteil und einem fest verbundenen Verschlusshülseninnenteil axial frei beweglich gelagert, wodurch dies als Baugruppe leicht vormontierbar ist.

Die Erfindung wird bezüglich eines vorteilhaften Ausführungsbeispiels näher erläutert mit:
Fig. 1 als wechselbare Werkzeugaufnahme im Teilschnitt
Fig. 2 Einzelheit bei dynamischer Beanspruchung im Winkelschnitt
Fig. 3 Einzelheit bei quasistatischer Beanspruchung im Winkelschnitt

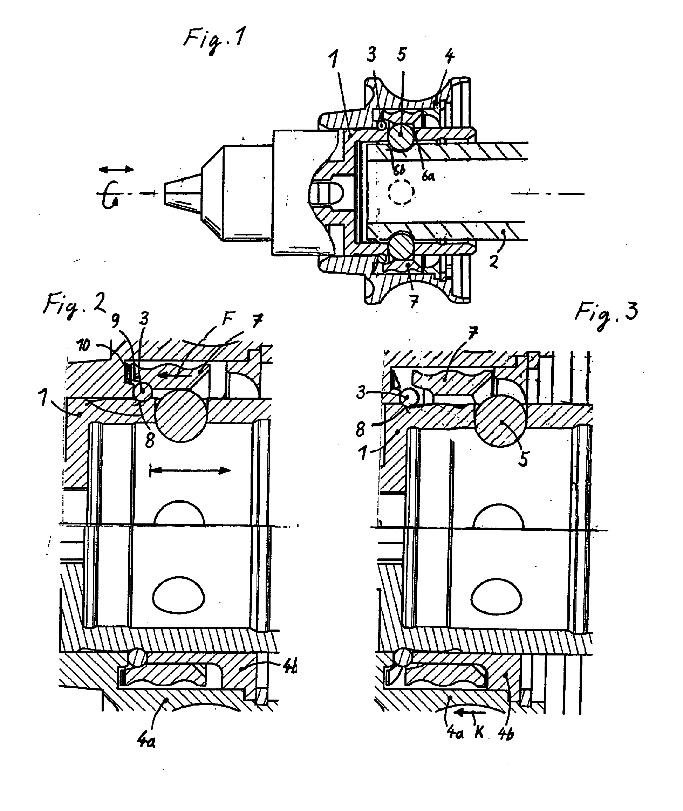

Nach Fig. 1 weist eine Werkzeugaufnahme 1, welche mit der antreibenden Werkzeugspindel 2 eines nicht weiter dargestellten Werkzeuggerätes montiert ist, eine von Hand gegen die Kraft eines als Federring ausgebildeten Federelements 3 axial versetzbare zweiteilige Verschlusshülse 4 für als Kugeln ausgeführte radial verriegelbare Verriegelungselemente 5 auf, welche sowohl in zugeordnete Mitnehmer 6a, 6b der Werkzeugspindel 2 als auch der Werkzeugaufnahme 1 eingreifen und diese formschlüssig miteinander verbinden. Der Verschlusshülse 4 ist ein innenliegendes, in dieser durch Trägheitskräfte axial frei sowie durch das Federelement 3 als einen werkzeugseitigen dynamischen Axialanschlag begrenzt bewegliches, hülsenförmiges Trägheitsverschlusselement 7 für die innenliegenden Verriegelungselemente 5 zugeordnet.

Nach Fig. 2 ist das Trägheitsverschlusselement 7 koaxial zwischen einem von Hand zugänglichen Verschlusshülsenaussenteil 4a und einem mit diesem über einen Sprengring fest verbundenen Verschlusshülseninnenteil 4b, welches umfänglich zwischen die Verriegelungselemente 5 eingreift, axial frei beweglich gelagert. Nach dargestellter schlagender dynamischer Beanspruchung befindet sich das Trägheitsverschlusselement 7 am dynamischen Axialanschlag, welchen es durch die Trägheitskraft F nicht überwinden kann. Der dynamischen Axialanschlag ist durch das Federelement 3 dynamisch stabil in der antriebsseitig stabilen Position einer axial begrenzten sowie nach aussen axial konvex ausgebildeten radialen Ausnehmung 8 der Werkzeugaufnahme 1 platziert. Die dem dynamischen Axialanschlag zugeordnete Fläche des Trägheitsverschlusselements 7 weist eine innenliegende Radialphase 9 auf, welche das Federelement 3 als dynamischen Axialanschlag radial aussen umgibt. Der werkzeugseitige Anschlag des Trägheitsverschlusselements 7 ist gegen das Verschlusshülsenaussenteil 4a über eine als Wellenfeder ausgeführte schwache Axialfeder 10 federnd ausgebildet.

Nach Fig. 3 bewirkt die im betriebsfreien Zugang quasistatisch von Hand über das von aussen zugängliche Verschlusshülsenaussenteil 4a über das fest damit verbundene Verschlusshülseninnenteil 4b und das daran axial anschlagende Trägheitsverschlusselement 7 ausgeübte Betätigungskraft K eine Versetzung des Federelements 3 in die werkzeugseitig bistabile Position der nach aussen axial konvex ausgebildeten radialen Ausnehmung 8. Das somit axial versetzte Trägheitsverschlusselement 7 bewirkt eine Freigabe aller Verriegelungselemente 5 der Werkzeugaufnahme 1 nach radial aussen.

## Patentansprüche

1. Werkzeugaufnahme für ein zumindest teilweise drehendes und schlagendes Werkzeuggerät, welche an der antreibenden Werkzeugspindel (2) des Werkzeuggerätes werkzeuglos montierbar ist, mit einer Verschlusshülse (4) und zumindest einem, durch die von Hand gegen eine Federkraft axial versetzbare Verschlusshülse (4) radial verriegelbarem, Verriegelungselement (5), welches sowohl in einer zugeordneten Mitnahme (6a, 6b) der Werkzeugspindel (2) als auch der Werkzeugaufnahme (1) eingreift, **dadurch gekennzeichnet, dass** einem durch Trägheitskräfte (F) axial begrenzt beweglichen Trägheitsverschlusselement (7) der Verschlusshülse (4) werkzeugseitig ein axial verschiebbarer Axialanschlag zugeordnet ist, der radial zwischen einer axial begrenzten radialen Ausnehmung (8) der Werkzeugaufnahme (1) dynamisch stabil platziert ist sowie
als radial nach innen vorgespanntes Federelement (3) ausgebildet ist.

2. Werkzeugaufnahme nach Anspruch 1, **dadurch gekennzeichnet, dass** die axial begrenzte radiale Ausnehmung (8) nach aussen axial konvex ausgebildet ist.

3. Werkzeugaufnahme nach Anspruch 2 oder 3, **dadurch gekennzeichnet, dass** die dem Axialanschlag zugeordnete Fläche des Trägheitsverschlusselements (4) eine innenliegende Radialphase (9) aufweist, welche in der Position der dynamischen Verriegelung zusätzlich den Axialanschlag zumindest teilweise radial aussen umgibt.

4. Werkzeugaufnahme nach Anspruch 3, **dadurch gekennzeichnet, dass** der werkzeugseitige Anschlag des Trägheitsverschlusselements (7) gegen die Verschlusshülse (4) über eine schwache Axialfeder (10) ausgebildet ist.

5. Werkzeugaufnahme nach einem der vorherigen Ansprüche, **dadurch gekennzeichnet, dass** das Trägheitsverschlusselement (7) hülsenförmig ausgebildet und koaxial innerhalb der Verschlusshülse (4) angeordnet ist.

6. Werkzeugaufnahme nach einem der vorherigen Ansprüche, **dadurch gekennzeichnet, dass** das Trägheitsverschlusselement (7) koaxial zwischen einem Verschlusshülsenaussenteil (4a) und einem damit fest verbindbaren Verschlusshülseninnenteil (4b) axial frei beweglich gelagert ist.

## Claims

1. Exchangeable tool holder for a partially rotating and impacting tool hat can be mounted, without using tools, on the driving spindle (2) of the tool, with a breech casing (4) and at least one locking element (5), which can be locked radially, by hand, against spring-loading, by means of an axially displaceable breech casing (4), whereby the said locking element (5) engages both in an associated entrainment means (6a, 6b) of the tool spindle (2) and in the tool holder (1), **characterized in that** an inertia fastener (7), of the breech casing (4), that can be moved, axially, to a limited extent by inertia forces, is associated, on the tool-side, with an axial stop that can be shifted axially and that is located, in a dynamically stable manner, between an axially bordered radial recess (8) in the tool holder (1) and is formed as a spring element (3) that is pre-tensioned in a radial, inward direction.

2. Tool holder in accordance with claim 1, **characterized in that** the axially bordered, radial recess (8) is axially convex in an outward direction.

3. Tool holder in accordance with claims 2 or 3, **characterized in that** the surface, of the inertia fastening element (4) associated with the axial stop has an inner, radial section (9) that, in the actively locking position, additionally at least partially, radially surrounds the axial stop on the outside.

4. Tool holder in accordance with claim 3, **characterized in that** the abutment on the tool-side of the inertia fastening element (7) against the breech casing (4) is formed by means of a weak axial spring (10).

5. Tool holder in accordance with one of the above claims, **characterized in that** the inertia fastening-element (7) is in the form of a collar and is disposed inside the breech casing (4).

6. Tool holder in accordance with one of the above claims, **characterized** it that the inertia fastening element (7) is supported, such that it can move freely in an axial direction, between an outer section (4a) of the breech casing and an inner section (4b) of the breech casing that is firmly connected to it.

## Revendications

1. Raccord d'outil pour un appareil au moins partiellement à rotation et à percussion, lequel raccord peut être monté sans outil sur la broche porte-outil menante (2) de l'appareil, comprenant un manchon de fermeture (4) et au moins un élément de verrouillage (5) qui peut être verrouillé radialement par l'intermédiaire du manchon de fermeture (4) déplaçable axialement à la main à l'encontre d'une force élastique et qui pénètre dans un moyen d'entraînement associé (6a, 6b) aussi bien de la broche porte-outil (2) que du raccord d'outil (1), **caractérisé en ce que**, côté outil, une butée axiale à translation axiale est associée à un élément de fermeture inertiel (7), à mobilité axiale limitée par des forces d'inertie (F), du manchon de fermeture (4), ladite butée étant disposée de manière dynamiquement stable radialement entre un évidement radial à limitation axiale (8) du raccord d'outil (L) et étant conformée en élément de ressort (3) précontraint radialement vers l'intérieur.

2. Raccord d'outil selon la revendication 1, **caractérisé en ce que** l'évidement radial à limitation axiale (8) présente une conformation convexe axialement vers l'extérieur.

3. Raccord d'outil selon la revendication 2 ou 3, **caractérisé en ce que** la surface de l'élément de fermeture inertiel (4) associée à la butée axiale présente un biseau radial intérieur (9) qui, dans la position de verrouillage dynamique, entoure en plus radialement, au moins partiellement, la butée axiale par l'extérieur.

4. Raccord d'outil selon la revendication 3, **caractérisé en ce que** la butée côté outil de l'élément de fermeture inertiel (7) contre le manchon de fermeture (4) est conformée en ressort axial faible (10).

5. Raccord d'outil selon une des revendications précédentes, **caractérisé en ce que** l'élément de fermeture inertiel (7) est conformé en manchon et disposé coaxialement à l'intérieur du manchon de fermeture (4).

6. Raccord d'outil selon une des revendications précédentes, **caractérisé en ce que** l'élément de fermeture inertiel (7) est monté coaxialement, avec une libre mobilité axiale, entre une partie extérieure de manchon de fermeture (4a) et une partie intérieure de manchon de fermeture (4b).
